Europäisches Patentamt

European Patent Office

Office européen des brevets

(11) Publication number: **0 487 231 A2**

# EUROPEAN PATENT APPLICATION

(21) Application number: **91310377.6**

(22) Date of filing: **11.11.91**

(51) Int. Cl.5: **B01D 35/00**, F01M 1/10

(30) Priority: **20.11.90 JP 120743/90**

(43) Date of publication of application:
**27.05.92 Bulletin 92/22**

(84) Designated Contracting States:
**DE FR GB**

(71) Applicant: **Mitsubishi Oil Company, Limited**
**no. 2-4, Toranomon 1-chome**
**Minato-ku Tokyo(JP)**

(72) Inventor: **Yano, Hisashi**
**1019-233 Aza Araizawa, Kuden-cho, Sakae-ku**
**Yokohama-shi, Kanagawa(JP)**
Inventor: **Fujioka, Mitulu**
**184-4 Kosuzume-cho, Totsuka-ku**
**Yokohama-shi, Kanagawa(JP)**
Inventor: **Kitada, Akiharu**
**6 Kitaterao 6-chome, Tsurumi-ku**
**Yokohama-shi, Kanagawa(JP)**
Inventor: **Kuwabara, Ryuzi**
**35-1 Matsumi-cho 1-chome, Kanagawa-ku**
**Yokohama-shi, Kanagawa(JP)**

(74) Representative: **Charlton, Peter John**
**Elkington and Fife Prospect House 8**
**Pembroke Road**
**Sevenoaks, Kent TN13 1XR(GB)**

(54) **Oil filter.**

(57) An oil filter is disclosed which comprises a housing opened at one end, a first separator unit disposed in the housing for removing solid contaminants from an oil and a second separator unit for removing gaseous contaminants. The first separator unit includes cylindrical primary and secondary filter elements aligned with each other, the secondary filter element being finer than the primary filter element. The second separator unit is accommodated within the space defined by an inner periphery of the primary filter element and includes a cylindrical casing, a cyclone disposed within the casing for defining a chamber arranged to generate a vortical flow of the oil introduced therein to thereby separate a gas-rich oil which gathers in an axially central portion of the chamber, the cyclone having a plurality of pores formed therethrough, and a removal pipe extending along an axis of the chamber and having a plurality of orifices, the removal pipe having a portion projecting from the cyclone. A pipe extends within the secondary filter element for defining a circular space between an inner periphery of the secondary filter element and the pipe, and communicates with the chamber through the pores for leading an oil containing little gaseous contaminants outside the housing. A duct is disposed in the pipe and comprises a vertical section and a horizontal section, the vertical section receiving an end of the portion of the removal pipe while the horizontal section penetrates a wall of the pipe to open in the circular space for discharging the gas-rich oil.

The present invention relates to an oil filter to be incorporated in a lubricating system for an internal combustion engine or the like and, more particularly, to an improvement in an oil filter of the type which can remove not only solid contaminants but also gaseous contaminants from the oil.

In machinery for construction, transportation and the like using lubricant, such as engines and various hydraulic devices, solid contaminants and gaseous contaminants have hitherto been removed from lubricant by separate devices and/or in different portions of the machinery. An integrated device has thus been desired which can remove both of the solid and gaseous contaminants effectively and which can be installed in a limited space of the machinery.

The inventors herein have proposed such an integrated device which is disclosed in U.S. Patent No. 4,865,632 owned by Mitsubishi Oil Co., Ltd. and issued September 12, 1989. The device comprises a first separator for filtering lubricant which is pumped into a housing to thereby remove solid contaminants, and a second separator for removing gaseous contaminants from the filtered oil by utilizing a centrifugal force. Specifically, the second separator has a cyclone defining a chamber adapted to generate a vortical flow of the oil introduced therein, whereby an oil containing little gaseous contaminants and therefore having a larger specific gravity gathers in a peripheral area of the chamber while a gas-rich oil having a smaller specific gravity gathers in a central area. A wall defining the chamber is provided with a plurality of pores through which the oil containing little gaseous contaminants flows out of the chamber. On the other hand, the gas-rich oil is discharged by a perforated removal pipe which extends into the chamber along its axis.

Also, there has recently been developed a "dual type" oil filter having a primary or "full-flow" element and a secondary or "by-pass" element arranged side by side. The primary element is relatively rough and the secondary element is relatively fine. The oil filter of this type is so constructed that the oil passing through the primary element is supplied to an engine or the like while the oil flowing through the secondary element is led to an oil pan, thereby improving removal efficiency of solid contaminants. An addition of gas removal function to this type of oil filter has been developed by the inventors herein and is disclosed in, for example, European Patent Application No. 89310649.2 (Publication No. 0376443). The addition has been accomplished by incorporating the second separator in a space within the primary or secondary element. However, the dual type filter inherently has a relatively complicated piping to ensure the respective flow from the primary and secondary elements, and the incorporation of second separator in the proposed device has required substantial modification of the first separator. This has necessarily increased a manufacturing cost and work to a considerable extent, lowering a commercial availability of the incorporation of second separator.

The present invention has been accomplished in view of the foregoing, and therefore its object is to provide an oil filter of the type having the dual filter elements and gas removal function, which can be manufactured economically and easily with minimum change to a usual structure of dual type filter.

According to the present invention, an oil filter includes a housing opened at one end thereof and a first separator unit disposed in the housing for removing solid contaminants from an oil introduced into the housing, the first separator unit including a cylindrical primary filter element and a cylindrical secondary filter element aligned with each other, the secondary filter element being finer than the primary filter element. A second separator unit is provided for removing gaseous contaminants from the oil that has passed through the primary filter element, and is accommodated within the space defined by an inner periphery of the primary filter element. The second separator unit includes a cylindrical casing, a cyclone disposed within said casing for defining a chamber adapted to generate a vortical flow of the oil introduced therein to thereby separate a gas-rich oil which gathers in an axially central portion of the chamber, the cyclone having a plurality of pores formed therethrough, and a removal pipe extending along an axis of the chamber and having a plurality of orifices, the removal pipe having a portion projecting from the cyclone. A pipe extends within the secondary filter element for defining a circular space between an inner periphery of the secondary filter element and the pipe, and communicates with the chamber through the pores for leading an oil containing little gaseous contaminants outside the housing. A duct is disposed in the pipe and comprises a vertical section and a horizontal section, the vertical section receiving an end of the portion of removal pipe while the horizontal section penetrates a wall of the pipe to open in the circular space for discharging the gas-rich oil.

The structure of the invention enables an incorporation of the second separator unit into the dual type oil filter only by replacing a pipe with the assembly consisting of the pipe and the duct. Accordingly, the gas removal function, if desired, can be added easily with a slight increase in manufacturing cost.

Preferably, the duct is provided with an O-ring secured in the vertical section for providing a liquid-tight seal between the removal pipe and the duct. A bracket may be attached in the pipe for supporting the duct and allows the oil to flow therethrough.

Other objects, features and advantages of the invention will be apparent from the following description of the preferred embodiments thereof when taken in conjunction with the accompanying drawings.

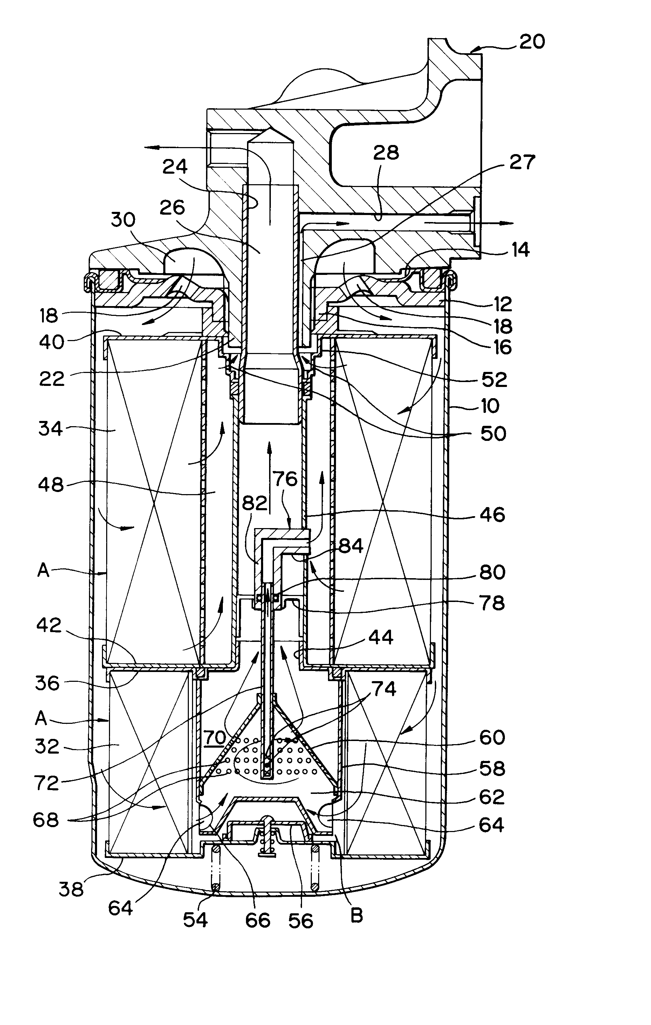

The single figure is a longitudinally sectioned view of an oil filter according to a preferred embodiment of the present invention.

Referring now to the drawing, an oil filter according to a preferred embodiment of the invention has a housing 10 of substantially cylindrical shape having an upper open end and a lower closed end. A base plate or disk 12 is secured to an inner peripheral surface of the housing 10 at a position near its upper end and is fixedly supported by means of a ring member 14 of which outer edge is seamed with the upper edge of the housing 10. The base plate 12 is formed with a central opening defined by a downwardly projecting circular wall 16 of which inner surface is threaded. Several apertures 18 are formed through the base plate 12 to surround the circular wall 16.

The housing 10 is attached to a mount block 20 by a threaded engagement between the circular wall 16 of base plate 12 and a downwardly extending sleeve 22 of the mount block 20. Fitted inside of the sleeve 22 is a tube 24 defining a first outlet passage 26 which is connected to a main oil gallery in an engine (not shown). The tube 24 further defines in cooperation with the sleeve 22 a slot 27 communicating with a second outlet passage 28 that leads to an oil pan (not shown). An inlet passage 30 is provided in the mount block 20 to open upon the apertures 18 for introducing into the housing 10 an oil which is fed under pressure by an oil pump (not shown). The lower surface of mount block is in tight contact, through the ring member 14, with the periphery of base plate 12 in order to prevent any leakage of oil.

Arranged within the housing 10 are a separator unit A for separating or filtering solid contaminants from the oil circulating in a lubricating system, and a separator unit B for separating gaseous contaminants in the oil. The separator unit A is of a dual type and comprises a primary or "full-flow" element 32 disposed in the lower portion of housing 10 and a secondary or "by-pass" element 34 placed on the primary element 32. The primary element 32 is relatively rough and supported by upper and lower end plates 36, 38 while the secondary element 34 is relatively fine and held between upper and lower end plates 40, 42. The upper end plate 36 of primary element 32 lies on the lower end plate 42 of secondary element 34 and has an inward extension terminating at a flange 44 on which is fitted a pipe 46 extending to the tube 24 for providing a lower extension of the first outlet passage 26. The pipe 46 extends along a center axis of the secondary element 34 with defining a circular space 48 therebetween which is connected with the slot 27 through openings 50 formed in a flange 52 of the upper end plate 40, the flange 52 being fitted on the tube 24 in a liquid-tight manner. The unit A is held in position by a spring 54 disposed between the bottom wall of housing 10 and the lower end plate 38 of primary element 32. A relief valve 56 is mounted on this end plate and adapted to open for providing a bypass passage for the oil when a pressure of oil is increased outside the elements 32, 34 due to a clogging thereof, so that the oil can flow through the valve 56 into the space defined within the primary element 32.

The separator unit B is disposed in the space within the primary element 32 coaxially therewith. The unit B includes a cylindrical casing 58 fixedly secured at its upper end to the end plate 36. A funnel-shaped member or cyclone 60 is housed within the casing 58 and is attached at its lower vertical portion to the peripheral surface of the casing 58, defining together with a bottom wall of the latter a chamber 62 which is adapted to generate a vortical flow of the oil as described hereinafter. Formed through the peripheral wall of casing 58 at a position below the cyclone 60 are a plurality of circumferentially spaced inlets 64 for introducing the oil into the chamber 62. Each inlet 64 is formed by punch press with providing a guide plate or deflector 66 extending inwardly relative to a tangent of the casing at the inlet, so that the oil introduced therethrough flows in a vortical pattern. A plurality of pores 68 are formed through the wall of cyclone 60 to connect the chamber 62 with a space 70 which is defined between the cyclone 60 and the casing 58 and communicates with the first outlet passage 26 via the pipe 46.

The converged end of cyclone 60 has an upper vertical portion in which a removal pipe 72 is tightly fitted. The removal pipe 72 extends into the chamber 62 and terminates at a lower closed end. The portion of the removal pipe 72 in the chamber 62 is perforated to provide a number of orifices 74, while the upper portion thereof extends into the pipe 46 through the space 70. An inverted L-shaped duct 76 is arranged in the pipe 46 and secured at a vertical section 82 to the pipe 46 by means of a bracket 78, a horizontal section 84 of the duct penetrating the wall of pipe 46 to open in the circular space 48. It is to be noted that the bracket 78 allows the oil to flow therethrough. The upper end portion of removal pipe 72 is inserted into the vertical section 82 of the duct 76 where an O-ring 80 is provided for a liquid-tight seal. Thus, the removal pipe 72 and duct 76 communicate the chamber 62 with the circular space 48.

When an oil is supplied by the pump (not shown), it flows into the housing 10 through the apertures 18. A part of the oil passes through the secondary element 34 from the outside to inside during which solid contaminants are removed from the oil, and is discharged via the circular space 48, opening 50 and the slot 27 into the second outlet passage 28. The remaining oil flows downward in the housing 10 to pass through the primary element 32, where it is introduced into the chamber 62 from inlets 64. Also, in case the elements 32 and 34 are clogged, the oil from the relief valve 56 enters into the chamber 62 via inlets 64. The deflectors 66 cooperate with the inlets 64 to create a vortical flow of oil. The oil then flows upward in the chamber 62 by a pressure differential with the vortical pattern, generating a centrifugal force which acts on the oil. Due to a difference in density, an oil containing much gaseous contaminants, i.e. gas-rich oil, is separated and gathers near the axial center of the flow where it is introduced through the orifices 74 into the removal pipe 72. The gas-rich oil is led via the removal pipe 72 and L-shaped duct 76 to the circular space 48 for mixture with the oil that has passed the secondary element 34 and for discharge through the second outlet passage 28. On the other hand, the oil containing little gaseous contaminants flows around the wall of cyclone 60 and passes through the pores 68 into the space 70 for circulation in the lubricating system via the first outlet passage 26 defined by the pipe 46 and tube 24.

As it will be understood from the foregoing, the second separator unit B can, if desired, be incorporated into the dual type oil filter of conventional structure only by replacing the usual pipe, which sections the first and second outlet passage sides, with the pipe 46 having the L-shaped duct 76. All other parts require any modification or substitution. Consequently, an addition of gas separating function by the second separator unit B can be achieved economically with a relatively simple work.

Although the present invention has been described with reference to the preferred embodiments thereof, many modifications and alterations may be made.

**Claims**

1. An oil filter comprising:
a housing opened at one end thereof;
a first separator unit disposed in said housing for removing solid contaminants from an oil introduced into said housing, said first separator unit including a cylindrical primary filter element and a cylindrical secondary filter element aligned with each other, said secondary filter element being finer than said primary filter element;
a second separator unit for removing gaseous contaminants from the oil that has passed through said primary filter element, said second separator unit being accommodated within the space defined by an inner periphery of said primary filter element, and said second separator unit including a cylindrical casing, a cyclone disposed within said casing for defining a chamber adapted to generate a vortical flow of the oil introduced therein to thereby separate a gas-rich oil which gathers in an axially central portion of said chamber, said cyclone having a plurality of pores formed therethrough, and a removal pipe extending along an axis of said chamber and having a plurality of orifices, said removal pipe having a portion projecting from said cyclone;
a pipe extending within said secondary filter element for defining a circular space between an inner periphery of said secondary filter element and said pipe, said pipe communicating with said chamber through said pores for leading an oil containing little gaseous contaminants outside said housing; and
a duct disposed in said pipe and comprising a vertical section and a horizontal section, said vertical section receiving an end of said portion of said removal pipe, and said horizontal section penetrating a wall of said pipe to open in said circular space for discharging the gas-rich oil.

2. An oil filter as claimed in claim 1, wherein said first separator unit further includes a pair of first end plates attached to said primary filter element and a pair of second end plates attached to said secondary filter element, one of said first end plates lying on one of said second end plates.

3. An oil filter as claimed in claim 2, wherein said one of said second end plates has a central opening and said one of said first end plates has a flange projecting through said central opening into the space within said secondary filter element, and wherein one end of said pipe is fitted on said flange.

4. An oil filter as claimed in claim 1, wherein said duct further comprising an O-ring secured in said vertical section for providing a liquid-tight seal between said removal pipe and said duct.

5. An oil filter as claimed in claim 1, further comprising a bracket attached in said pipe for supporting said duct, said bracket allowing the oil to flow therethrough.